(19) Europäisches Patentamt
European Patent Office
Office européen des brevets

(11) **EP 1 438 853 B1**

(12) **FASCICULE DE BREVET EUROPEEN**

(45) Date de publication et mention
de la délivrance du brevet:
**04.02.2009 Bulletin 2009/06**

(21) Numéro de dépôt: **02796812.2**

(22) Date de dépôt: **18.10.2002**

(51) Int Cl.:
***H04N 7/14*** *(2006.01)*  ***H04N 7/15*** *(2006.01)*

(86) Numéro de dépôt international:
**PCT/FR2002/003584**

(87) Numéro de publication internationale:
**WO 2003/036973 (01.05.2003 Gazette 2003/18)**

(54) **SYSTEME DE VIDEOCONFERENCE**

VIDEOKONFERENZSYSTEM

VIDEOCONFERENCE SYSTEM

(84) Etats contractants désignés:
**AT BE BG CH CY CZ DE DK EE ES FI FR GB GR
IE IT LI LU MC NL PT SE SK TR**

(30) Priorité: **22.10.2001 FR 0113630**

(43) Date de publication de la demande:
**21.07.2004 Bulletin 2004/30**

(73) Titulaire: **FRANCE TELECOM
75015 Paris (FR)**

(72) Inventeurs:
• **DELEAM, David
F-22700 Perros Guirec (FR)**
• **SOLLAUD, Aurélien
F-22560 Trebeurden (FR)**
• **SCHMITT, Jean-Claude
F-91600 Savigny S/Orge (FR)**
• **BOISSONADE, Patrick
F-78320 LE MESNIL SAINT DENIS (FR)**
• **GALLIGER, Olivier
F-75014 Paris (FR)**

(74) Mandataire: **Bioret, Ludovic et al
Cabinet Vidon
16 B, rue de Jouanet - B.P. 90333
35703 Rennes Cedex 07 (FR)**

(56) Documents cités:
**WO-A-96/23388       US-A- 5 594 725
US-A- 5 758 194**

**Description**

La présente invention concerne un système de conférence du type qui comprend un pont de conférence audio et/ou vidéo et/ou de données auquel une pluralité de terminaux peuvent se connecter pour participer à une conférence. Les ponts de conférence ou organe central de la conférence (chaque participant est en relation directe avec le pont, et est donc en relation avec les autres participants au travers du pont) peuvent être par exemple des ponts à mixage, à multiplexage, des ponts répliquants.

Les ponts à mixage sont suffisamment répandus dans la nature pour ne pas avoir à décrire leur mode de fonctionnement, ici par contre, il n'en est pas de même des ponts à multiplexage et des ponts répliquants qui commencent à être utilisés notamment dans le contexte des conférences sur réseaux IP.

Le pont répliquant a pour but de répliquer les flux audio et/ou vidéo d'un correspondant vers tous les autres correspondants qui reçoivent donc plusieurs flux à décoder. Les flux audio sont souvent mixés par le récepteur avant d'être restitués mais aussi parfois envoyés chacun sur des haut-parleurs différents. Les flux vidéo peuvent être tous visualisés, on se place alors dans un contexte de conférence avec présence permanente de tous les participants.

Le pont à multiplexage est basé sur le même principe. Mais pour un récepteur X, au lieu de simplement dupliquer les flux des autres participants pour les lui transmettre, ce pont va multiplexer les flux des autres participants afin d'optimiser le transport des flux en limitant le sur-débit lié à la couche transport. Par exemple, sur un réseau IP, au lieu d'envoyer N paquets correspondant aux N participants distants, le pont à multiplexage ne va envoyer qu'un paquet avec les données des N participants distants multiplexées, et ainsi va gagner en débit en factorisant les en-têtes IP, ce qui minimise alors le surplus (overhead) de débit lié aux en-têtes IP (bien souvent IP/UDP/RTP).

On peut aussi envisager des ponts mixtes mixage-multiplexage ou mixage-répliquants dans le but de ne fournir de la présence permanente que de M (M<=N) participants sur les N présents dans la conférence.

Un des problèmes classiques est de permettre des conférences avec des participants ayant des capacités de transmissions différentes. En effet, en permettant l'interconnexion de réseaux hétérogènes, en offrant des droits d'accès différents ou encore en utilisant des terminaux ayant des capacités de calculs différentes, cela entraîne la mise en conférence de participants ayant des capacités différentes pouvant être caractérisée en terme de débits entrant et sortant. Comment permettre alors aux participants à faibles débits de participer à une conférence sans obliger un repli de tous les conférenciers vers un mode à qualité minimale voire médiocre ?

Dans le cas des ponts répliquants et/ou à multiplexage, on se rend compte que le débit du ou des flux allant du pont vers les participants croît avec le nombre de participants. Comment alors permettre à quelqu'un de rejoindre la conférence lorsque le débit reçu par un des participants ne peut pas être augmenté compte tenu de son accès réseau, tout en conservant la qualité de la conférence pour les participants ayant des accès réseaux non encore saturés ?

Un autre problème est l'adaptation du débit des flux transmis aux variations dynamiques des capacités de transmission d'un participant. Le but étant de conserver une continuité dans les flux transmis et d'éviter les coupures dues aux pertes pouvant être engendrées par des saturations du lien de transmission.

Les techniques actuelles ne permettent pas complètement de résoudre ces problèmes, mais proposent plutôt des solutions de repli.

Ainsi, lorsque les participants n'ont pas tous les mêmes capacités d'accès réseau, une première solution consiste à trouver un mode de conférence identique pour tous les participants correspondant au mode pouvant être accepté pas tous. On parle alors d'un mode de repli vers le bas. La qualité de la conférence est donc limitée par le participant de capacité la plus faible, ce qui est dommage pour les personnes pouvant éventuellement profiter d'un niveau de qualité supérieure. De plus, ceci oblige aussi à munir les équipements (terminaux et ponts) de plusieurs modes de fonctionnement pour permettre des connexions de différentes qualités. Une deuxième solution à ce problème peut consister à équiper le pont d'éléments jouant le rôle de passerelles. Cette fois, au lieu de faire un repli dans le meilleur mode commun possible, la conférence peut se faire dans un mode supérieur, mais les participants ne possédant pas les capacités nécessaires accèdent au pont via des passerelles qui effectuent alors des transcodages. La mise en place de telles passerelles est complexe, coûteuse, et est une source de dégradation de la qualité en raison du transcodage et de la prise de retard de transmission supplémentaire due à ce transcodage. De plus, en rajoutant des éléments dans le système, on réduit potentiellement la fiabilité de celui-ci.

De la même façon, dans les ponts à multiplexage et/ou répliquants, lors d'une conférence où l'on est déjà à la limite des capacités pour au moins un des participants, la seule façon d'accueillir un nouveau participant (qui lui aussi peut avoir des capacités limitées) est de se replier dans un mode de conférence inférieur. Néanmoins, il est possible de mettre en place des techniques plus complexes. Il est possible par exemple de rajouter des fonctionnalités de mixage ou encore limiter le nombre de participants actifs en même temps à l'aide de mécanismes de DAV (Détection d'Activité Vocale) et/ou des mécanismes d'autorisation de prise de parole.

Dans le cas de dégradations dynamiques d'un lien, certaines techniques consistent à réduire le débit émis, en modifiant le comportement des codeurs (ceci est notamment possible avec les codeurs vidéo classiques). Mais en prenant l'exemple des ponts répliquants, une diminution dynamique du débit du codeur va amener une dégradation de ce signal pour tous les participants, alors qu'un seul lien peut présenter des problèmes. Cette solution n'est donc pas idéale. De plus, elle oblige le pont à commander les codeurs de certains terminaux en fonction des connexions avec d'autres terminaux.

On connaît, du document US-5 758 194, une technique adaptant la qualité des signaux au type de réseau utilisé par chaque terminal dans un système à réseaux hétérogènes, mais cette approche ne résout que partiellement ces problèmes

Le but de la présente invention est de pourvoir des ponts de conférence de moyens leur permettant de résoudre les problèmes qui sont soulevés ci-dessus. Il est par conséquent de prévoir des moyens qui permettent la gestion de conférence multimédia (audio et audio-vidéo) notamment pour l'adaptation des flux transmis aux capacités de transmission des participants à la conférence, ainsi qu'aux variations dynamiques de ces capacités.

Le but de la présente invention est également de proposer un système de conférence dans lequel la manipulation des données soit la plus simple possible, notamment en évitant des traitements algorithmiques complexes sur ces données. Ceci permet une implémentation simple de l'invention qui ne nécessite pas d'importantes ressources matérielles et/ou logicielles.

Afin d'atteindre ces buts, l'invention propose un système de conférence selon la revendication 1.

Avantageusement, les moyens pour traiter les flux audio/vidéo/ de données sont constitués d'unités de traitement prévues pour tronquer les charges utiles des paquets utilisés pour la transmission de manière à ce que lesdits flux présentent le niveau hiérarchique requis.

Avantageusement, les moyens pour déterminer le niveau hiérarchique déterminent le niveau hiérarchique q requis pour un terminal lorsque la bande passante disponible sur le lien entre le pont et le terminal est inférieure au débit utilisé par le terminal pour recevoir le niveau hiérarchique mais est supérieure au débit utilisé par le terminal pour recevoir le niveau hiérarchique.

Selon une autre variante de réalisation de la présente invention, lesdits moyens pour déterminer le niveau hiérarchique déterminent le niveau hiérarchique requis pour un terminal sur la base d'informations concernant sa bande passante utile sur le lien de sortie entre ledit pont et ledit terminal, le nombre de terminaux participant à la conférence et sur la base des informations des débits transmis par chaque terminal vers le pont pour des niveaux hiérarchiques.

Ainsi, avantageusement, lesdits moyens pour déterminer le niveau hiérarchique sont conformes à la revendication 5.

Les flux émis par les terminaux peuvent comporter un indice de priorité, et l'étape b) ci-dessus de décrémentation des niveaux hiérarchiques de plus haut niveau est effectuée sur les flux issus des terminaux dans l'ordre des indices de priorité affectés auxdits flux. Ledit indice de priorité est par exemple binaire, ou plus complexe, définissant par exemple des classes de priorité.

Selon une autre caractéristique de l'invention, lesdites informations concernant la bande passante utile d'un terminal sont des informations statiques théoriques disponibles pour ledit terminal. Ces informations statiques théoriques peuvent dépendre d'une bande passante théorique disponible, des capacités de calcul dudit terminal considéré et des droits d'accès pour ledit terminal.

Par ailleurs, lesdites informations concernant la bande passante utile d'un terminal sont des informations dynamiques. Ces informations dynamiques concernant la bande passante utile du lien vers le terminal peuvent être des informations dynamiques délivrées par des unités d'évaluation de la bande passante physique disponible.

L'invention propose également un procédé selon la revendication 11.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 est un schéma synoptique d'un système de conférence selon l'invention,
La Fig. 2 est un diagramme illustrant le codage hiérarchique,
La Fig. 3 est un schéma synoptique d'un premier mode de réalisation d'un pont d'un système de conférence selon la présente invention, et
La Fig. 4 est un schéma synoptique d'un second mode de réalisation d'un pont d'un système de conférence selon la présente invention.

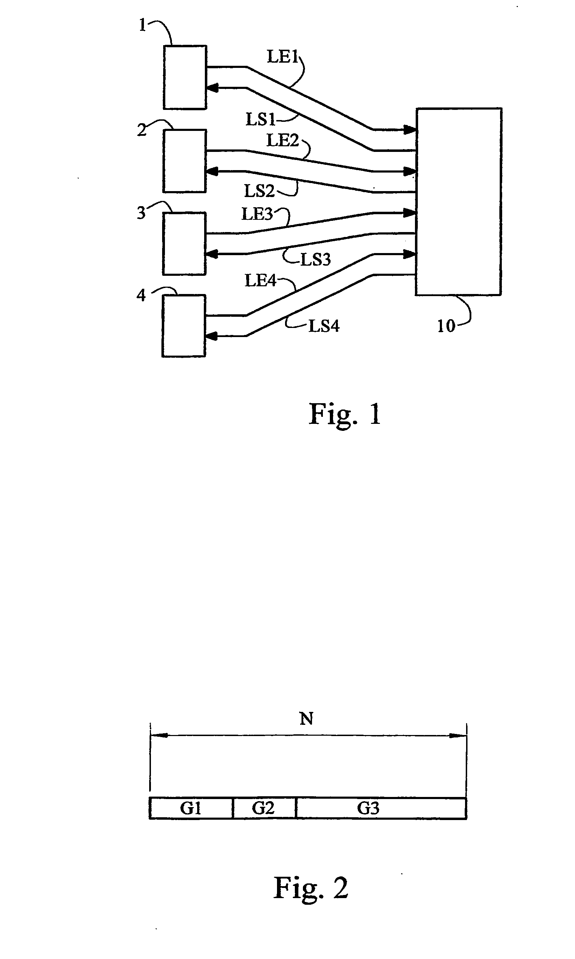

On a représenté à la Fig. 1 un système de conférence qui est essentiellement constitué d'un pont 10 auquel des terminaux 1 à 4 participant à une conférence sont reliés par des liens d'entrée LE1 à LE4 pour des liaisons terminal vers pont ainsi que des liens de sortie LS1 à LS4 pour des liaisons pont vers terminal. Le nombre de quatre terminaux est donné à titre exemplatif et à un temps t donné. En effet, ce nombre pourrait être différent d'une conférence à une autre et même en cours d'une même conférence. Dans la suite de la description, ce nombre est noté N.

Le principe de base de l'invention est, d'une part, d'utiliser, pour la transmission des flux entre les différents terminaux 1 à N participant à la conférence des flux codés de manière hiérarchique et, d'autre part, de décider au niveau du pont 10 du nombre de groupe de bits hiérarchiques qui sont alors transmis vers un terminal i via le lien LSi entre le pont 10 et le terminal i, et ce, en fonction de critères décisionnels liés au système, tels que le nombre N de terminaux en conférence, la capacité en termes de bande passante ou de débit disponible statique et/ou dynamique Bpi du lien LSi vers un terminal i (i est un entier qui peut prendre toutes les valeurs 1 à N), les droits d'accès du terminal i, les capacités de calcul du terminal i, le débit émis DEj par les terminaux j (j est un entier qui peut prendre toutes les valeurs 1 à N, à l'exception de la valeur i), etc.,

On rappelle ici qu'un codeur hiérarchique qu'il agisse sur des signaux audio, vidéo ou sur des données, génère à partir d'une partie du signal d'origine (par exemple une trame de 20 ms du signal de parole dans le cas de certains codeurs audio) un train binaire représenté par M bits séparés en P groupes de bits G1 à GP consécutifs (P≥2, et P≤M), comme cela est représenté à la Fig. 2 pour P = 3. Le premier de ces groupes constituant le groupe de base G1 est indispensable pour obtenir tout signal décodé quel que soit la qualité requise. En ne décodant que ce groupe de base G1, on aura alors une qualité minimale. Les groupes suivants G2 à GP permettent des améliorations de qualité consécutives. Si tous les groupes de bits G1 à GP sont transmis, la qualité est alors celle pouvant être atteinte au mieux par le système. Le groupe GP ne sert à rien si le groupe GP-1 n'a pas été reçu et ainsi de suite. Il y a donc une hiérarchie dans les groupes de bits générés. Le train binaire de ce genre de codeur peut ainsi être facilement découpé par troncature et permet donc de changer le débit utilisé par un même codeur tout en garantissant une continuité dans le signal transmis et restitué. Ainsi, à la Fig. 2, seul le groupe G1 peut être transmis, ou les groupes G1 et G2 ou tous les groupes G1, G2 et G3. On parlera, dans chacun de ces cas, de hiérarchie de niveau 1, de niveau 2 ou de niveau 3. Le débit DH1 offert par le niveau hiérarchique 1 est noté D1, le débit DH2 offert par les groupes G1 et G2 réunis est D1 + D2 et le débit DH3 offert par tous les groupes G1 à G3 est D1 + D2 + D3. De manière générale, le débit DHq offert par un niveau hiérarchique q est la somme des débits de chaque niveau hiérarchique inférieur ou égal à ce niveau q, soit

$$\text{DHq} = \sum_{1}^{q} Dp .$$

Prenons l'exemple d'un codeur de parole hiérarchique travaillant avec des trames de 40 ms offrant une hiérarchie sur 3 niveaux : D1 = 8 kbit/s pour le premier groupe G1, D2 = 6 kbit/s pour le deuxième G2 et D3 = 16 kbit/s pour le troisième G3. On a donc un débit global de 8+6+16 = 30 kbit/s, soit, pour une trame, un train binaire de 150 octets divisible en trois groupes consécutifs G1, G2 et G3 de respectivement 40 octets, 30 octets et 80 octets.

La décision du nombre de groupe de bits hiérarchiques qui sont transmis vers un terminal i via le lien LSi entre le pont 10 et le terminal i entraîne une action du pont 10 qui est d'effectuer, en fonction des critères décisionnels mentionnés ci-dessus, une troncature sur les trains binaires afin d'amener le flux sur le lien LSi au niveau hiérarchique désiré.

Selon l'invention, en prenant l'exemple d'une réception complète par le pont 10 des trains binaires émis par les terminaux et en considérant un terminal i, le pont 10 va suivant les capacités de débit disponible des autres terminaux (1 à N à l'exception de i) ne leur envoyer qu'une partie ou l'intégralité de ce train binaire. La manipulation des données est assez simple car il n'y aucun traitement algorithmique à faire sur les données, simplement une sélection hiérarchique de ces données.

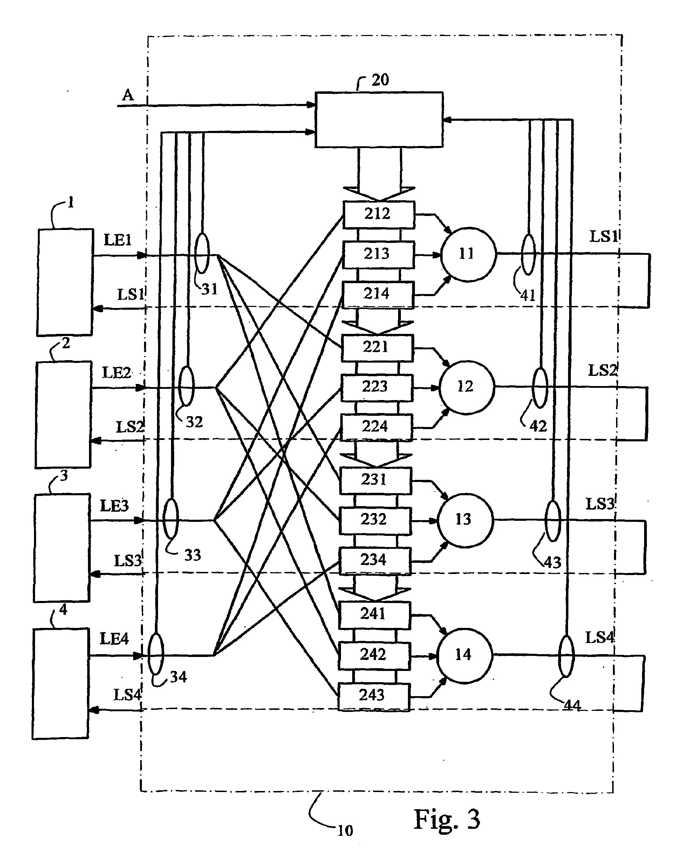

A la Fig. 3, on a représenté un premier mode de réalisation d'un pont 10 selon l'invention. A l'instar de celui de la Fig. 1, le pont 10 est susceptible de gérer quatre terminaux de conférence 1 à 4 reliés audit pont 10 par des liens d'entrée LE1 à LE4 pour la transmission de leurs signaux au pont 10, et par des liens de sortie LS1 à LS4 pour la transmission des signaux émis par le pont 10 vers eux. En ce qui concerne le nombre de terminaux, on rappelle ici que ce nombre peut être différent, peut varier d'une conférence à une autre et d'un moment à tout autre pendant une même conférence.

Le pont 10 comporte quatre unités d'assemblage 11 à 14 prévues pour respectivement assembler les flux audio et/ou vidéo et/ou de données reçus des terminaux 1 à 4 autres que celui qui leur correspond, ces flux audio et/ou vidéo et/ou de données ayant été préalablement traités dans des unités de traitement 212 à 243. Les unités de traitement sont au nombre de N x (N - 1) et, à la Fig. 3, elles sont référencées avec le chiffre des centaines à 2, le chiffre des dizaines correspondant au terminal concerné, et le chiffre des unités correspondant au terminal associé dont les signaux sont traités : par exemple, l'unité référencée 212 traite les flux issus du terminal 2 en vue de les transmettre au terminal 1.

Les unités d'assemblage 11 à 14 réalisent un assemblage qui peut être un mixage, une simple réplication ou un multiplexage des flux qui ont été traités dans les unités de traitement 212 à 243 et délivrent des flux assemblés qui sont transmis sur les liens de sortie LS1 à LS4 respectifs.

Le mixage consiste à mixer les différents flux entrants issus des terminaux et à délivrer un nouveau flux résultant de ce mixage. Plus particulièrement, les charges utiles (payload) des paquets des flux entrants sont mixés arpès décodage (complet ou partiel) puis le flux mixé est ré-encodé de manière à former la charge utile des paquets résultant, ces derniers possédant leurs propres en-têtes.

La réplication consiste à répliquer les flux entrants issus de chaque terminal vers les autres terminaux et à délivrer, à chaque terminal, un flux où chacun des flux entrants des autres terminaux est présent tel quel.

Le multiplexage consiste à multiplexer les flux entrants issus des terminaux et à délivrer, à chaque terminal, un flux multiplexé.

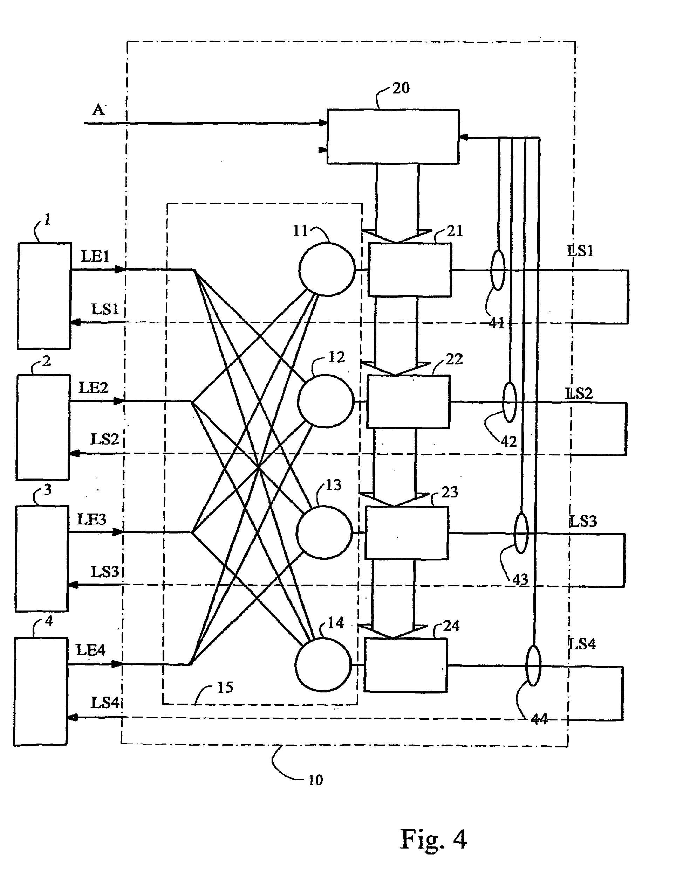

Comme on pourra le concevoir à la description d'un second mode de réalisation en relation avec la Fig. 4, le présent mode de réalisation est plus particulièrement adapté à des ponts à réplication et à multiplexage, c'est-à-dire pour lesquels les unités d'assemblage 11 à 14 effectuent une simple réplication ou un multiplexage des flux.

Chaque unité de traitement 212 à 243 (généralement 2ij avec i et j entiers et j différent de i) a pour fonction essentielle de tronquer ou de ne pas tronquer les flux vidéo/audio/de données qu'elle reçoit du terminal j de manière à délivrer des signaux possédant un niveau hiérarchique de codage q choisi, signaux qui sont transmis, après assemblage dans l'unité li, au terminal i.

Chaque unité de traitement 212 à 243 est pilotée par une unité de contrôle 20 dont la fonction est de déterminer le niveau hiérarchique q de codage à appliquer au terminal j correspondant en vue de son émission sur le lien de sortie LSi également correspondant et ce, en fonction de critères décisionnels liés au système, tels que le nombre de terminaux dans la conférence, la capacité en terme de bande passante ou débit statique et/ou dynamique du lien LSi vers le terminal i, les droits d'accès du terminal i, le débit émis par un terminal j, etc. L'unité 20 peut déterminer ces critères décisionnels en fonction d'informations qui lui sont transmises par le réseau (flèche A), par des unités 31 à 34 d'évaluation de la bande passante utilisée sur les liens d'entrée respectifs LE1 à LE4 et/ou encore par des unités 41 à 44 d'évaluation de la bande passante disponible sur les liens de sortie respectifs LS1 à LS4. Ces unités d'évaluation sont, par exemple, en cas de flux temps réels IP, du type RTCP (Real Time Control Protocol).

On propose maintenant un mode de fonctionnement de l'unité de contrôle 20 dans le cas où elle agit uniquement en fonction d'une information relative aux bandes passantes disponibles allouées aux liens LS1 à LSN entre le pont 10 et les terminaux 1 à N. Cette information de bande passante disponible possède deux composantes : une composante statique et une composante dynamique.

Par composante statique, on sous-entend la connaissance d'une bande passante théorique disponible pour chaque terminal. Cette information peut être soit positionnée par un administrateur du pont 10 et de la conférence (flèche A), soit être fournie de manière transparente à l'aide d'un échange d'information entre le terminal concerné et le pont 10 au moment de la connexion de ce terminal au pont 10. La valeur de cette bande passante théorique peut être définie notamment en fonction des droits d'accès du terminal considéré, de ses capacités de calcul, de la bande passante physique disponible, etc.

Quant à l'information dynamique, elle correspond à une connaissance permanente de la bande passante disponible sur un lien de sortie LSi. Comme on l'a vu précédemment, cette information peut par exemple être évaluée au moyen d'unités d'évaluation 41 à 44 qui, pour les flux temps réels IP, peuvent être du type RTCP (Real Time Control Protocol).

Dans la suite du document, on utilisera le terme "bande passante disponible" pour désigner toute combinaison de ces deux composantes. Cette bande passante disponible sera notée BPi, i étant l'indice du lien concernant cette bande passante.

La stratégie qui est alors mise en oeuvre par l'unité de contrôle 20 ne prend donc en compte que les informations de bandes passantes disponibles BPi sur le lien de sortie LSi du pont 10 vers un terminal i ainsi que l'information du nombre N de terminaux participant à la conférence. En particulier, elle ne prend pas en compte le débit émis par les terminaux vers le pont 10, cas qui est décrit plus loin.

On considère donc ici que le nombre de terminaux est N et que le nombre maximum de niveaux de hiérarchie est P. On définit par ailleurs le débit $DU_i^q$ utile à un terminal i pour recevoir les flux des N-1 autres terminaux, flux à un niveau hiérarchique q, un débit qui se décompose, d'une part, en la somme des débits DHq nécessaires à la transmission au niveau hiérarchique q des informations utiles issues des autres terminaux j (j = 1 à N, j ≠ i), lesquelles se trouvent dans la charge utile (payload) des paquets transmis et, d'autre part, du débit lié aux en-têtes des paquets transmis, généralement appelé sur-débit d'en-tête et noté ici Dh.

L'expression du débit utile Dui au terminal i peut donc s'écrire :

$$DU_i^q = Dh + DHq = Dh + (N\text{-}1)\sum_1^q Dp$$

Dans le cas d'un pont à multiplexage où, à partir des paquets reçus des autres terminaux, sont assemblés de nouveaux paquets destinés à un terminal i, le sur-débit d'en-tête Dh lié aux en-têtes des paquets transmis est indépendant du nombre de terminaux dans la conférence. Le débit d'en-tête Dh représente donc le débit des en-têtes des flux transmis sur le lien considéré que l'on note Ds. On a donc :

$$DU_i^q = Ds + (N-1) \sum_1^q Dp$$

Dans le cas d'un pont répliquant où chaque paquet reçu d'un terminal est répliqué vers les autres terminaux, le débit Dh lié aux en-têtes des paquets transmis vers un terminal i est proportionnel au nombre de flux transmis au pont 10, c'est-à-dire au nombre de terminaux autre que le terminal concerné. On a donc

$$Dh = (N - 1)\,Ds$$

où Ds est le débit d'en-tête des paquets des flux sortants. Le débit utile $DU_i^q$ à un terminal i peut alors s'écrire :

$$DU_i^q = (N-1)\left(Ds + \sum_1^q Dp\right)$$

Si l'on note $DG_j^q$ le débit global du terminal j tel qu'il apparaît dans les flux sortants vers un terminal i au niveau hiérarchique q, avec i # j, on peut écrire :

$$DU_i^q = \sum_{j=1\,\text{à}\,N,\,j\neq i} DG_j^q$$

On constate que dans l'une ou l'autre expressions données ci-dessus, le débit $DU_i^q$ utile à un terminal i est fonction du niveau hiérarchique q des données qu'il reçoit.
Selon le premier mode de réalisation de l'invention, si la bande passante disponible BPi sur le lien de sortie LSi vers le terminal i est inférieure au débit utile $DU_i^{q+1}$ au terminal i pour des flux au niveau hiérarchique q+1, mais supérieure ou égale à ce débit $DU_i^q$ pour des flux au niveau hiérarchique q, alors l'unité de contrôle 20 commande les unités de traitement 2ij (avec j ≠ i) de manière que les flux audio/vidéo/de données issus des terminaux j soient tronqués au niveau hiérarchique q.
Par exemple, pour P = 3, on peut écrire :

Si la bande passante disponible BPi vers le terminal i est supérieure ou égale au débit utile $DU_i^3$ nécessaire pour la transmission des N-1 flux au débit correspondant à la hiérarchie 3

$(BPi \geq DU_i^3 = Dh + (N-1)(D1 + D2 + D3)$, le terminal i considéré reçoit tous les flux des autres terminaux j (j ≠ i) sans troncature.

Si la bande passante disponible BPi sur le lien de sortie LSi vers le terminal participant i est inférieure au débit utile $DU_i^3$, mais supérieure ou égale à $DU_i^2$ ($DU_i^3 > BPi \geq DU_i^2$), le terminal i reçoit tous les flux des autres terminaux j (j ≠ i) avec au minimum une troncature au niveau hiérarchique 2.

Si la bande passante disponible BPi sur le lien de sortie LSi vers le terminal participant i est inférieure au débit utile $DU_i^2$, mais supérieure ou égale à $DU_i^1$ ($DU_i^2 > BPi \geq DU_i^1$), le terminal i reçoit tous les flux des autres terminaux j (j ≠ i) avec au minimum une troncature au niveau hiérarchique 1.

On va maintenant décrire un exemple de mise en oeuvre de la stratégie qui vient d'être définie. Pour simplifier la description, on va se placer dans un contexte de réseau IP et de conférence audio avec un pont répliquant. Les autres cas et notamment celui du pont à multiplexage peuvent en être facilement extrapolés.

Considérons donc par exemple pour commencer une conférence audio avec quatre terminaux participants 1 à 4. Ces quatre terminaux sont déjà connectés au pont 10 et ont déclaré les bandes passantes disponibles respectives BP1, BP2, BP3, et BP4. La conférence audio utilise un codeur hiérarchique à 3 niveaux offrant donc un débit utile crête Dc = D1 + D2 + D3, et des sous-débits hiérarchiques D1, D2 et D3 dans un contexte de réseaux IP. Le sur-débit d'en-tête des paquets des flux sortants Ds correspond, par exemple, à l'en-tête IP/UDP/RTP pour les flux audio temps réel. Un paquet audio comprenant une trame audio, dans le cas d'un flux IP/UDP/RTP comporte généralement un en-tête de 40 octets, ce qui implique donc un sur-débit de 8 kbit/s pour des trames de 40 ms (40 octets * 8 bits / 40 ms).

Pour illustrer cette stratégie de décision mise en oeuvre, on va se placer dans le cas où l'on utilise des trames audio de 40 ms pour lesquelles le sur-débit d'en-tête des paquets des flux sortants Ds est égal à 8 kbit/s. On va prendre D1 = 8 kbit/s, D2 = 6 kbit/s, D3 = 16 kbit/s, et l'on va considérer les bandes passantes disponibles déclarées BP1 = 56 kbit/s, BP2 = 96 kbit/s, BP3 = 128 kbit/s, et BP4 = 256 kbit/s.

Pour illustrer tous les cas qui se présentent, on a représenté ci-dessous un tableau à deux dimensions de taille NxN où N est le nombre de terminaux participant à la conférence. Les lignes représentent pour un terminal i donné les débits maximums pouvant être reçus de chacun des autres terminaux, les colonnes représentent les débits maximums qu'un terminal i peut envoyer aux autres terminaux, et ceci vu au niveau du pont 10.

|  | Terminal 1 | Terminal 2 | Terminal 3 | Terminal 4 |
|---|---|---|---|---|
| Terminal 1 |  | $DG_2^1 = 16$ | $DG_3^1 = 16$ | $DG_4^1 = 16$ |
| Terminal 2 | $DG_1^2 = 22$ |  | $DG_3^2 = 22$ | $DG_4^2 = 22$ |
| Terminal 3 | $DG_1^3 = 38$ | $DG_2^3 = 38$ |  | $DG_4^3 = 38$ |
| Terminal 4 | $DG_1^3 = 38$ | $DG_2^3 = 38$ | $DG_3^3 = 38$ |  |

Les débits globaux $DG_i^1$ de 16 kbit/s correspondent à la hiérarchie 1 (8 + 8 kbit/s), ceux $DG_i^2$ de 22 kbit/s correspondent à la hiérarchie 2 (8 + 8 + 6 kbit/s) et ceux $DG_i^3$ de 38kbit/s correspondent à la hiérarchie 3 (8+8+6+16 kbit/s).

Ce tableau indique par exemple que le pont 10 va transmettre en l'état le flux venant du terminal 1 vers les terminaux 3 et 4 et que, par contre, les flux issus des autres terminaux 2 à 4 et se dirigeant vers le terminal 1 sont tronqués au niveau de la hiérarchie 1. On supprimera donc les groupes de données aux niveaux hiérarchiques supérieurs au niveau hiérarchique concerné, en l'occurrence le niveau 1. Ainsi, la troncature est réalisée par une simple suppression d'une partie des données utiles (payload) des paquets IP allant vers le terminal 1. Une mise à jour des en-têtes associés vis-à-vis notamment de la longueur du paquet et du CRC peut s'avérer nécessaire.

On constate que, dans la stratégie qui vient d'être décrite, on a considéré que tous les flux émis par les terminaux 1 à 4 sont envoyés au pont 10 avec un niveau de hiérarchie identique, par exemple le plus haut niveau possible. Si tel n'est pas le cas, alors il résulte de cette stratégie une perte d'efficacité. En effet, si le pont détermine qu'il peut transmettre du terminal 1 vers le terminal 2 la hiérarchie 2, mais qu'en réalité le terminal 1 n'envoie au pont 10 que la hiérarchie 1, le pont 10 ne renvoie alors évidemment que la hiérarchie 1 vers le terminal 2. Une seconde stratégie définie ci-dessous permet de remédier à ce problème.

Cette autre stratégie, en plus de prendre en compte les informations de bande passante disponible BPi du pont 10 vers chaque terminal i et l'information du nombre N de terminaux à la conférence, prend aussi en compte l'information des débits DEj transmis par chaque terminal j (j = 1 à N, j ≠ i) vers le pont 10. Comme déjà mentionné ci-dessus, cette dernière information peut être transmise par les terminaux au pont 10 ou elle peut être évaluée au moyen d'unités d'évaluation 31 à 34 associées respectivement aux liens d'entrée LE1 à LE4.

Selon le second mode de réalisation de l'invention, si la bande passante disponible sur le lien de sortie LSi vers le terminal n'est pas inférieure à la somme des débits des flux envoyés par les (N-1) autres terminaux j (j≠i), alors aucune troncature n'est envisagée sur ces flux. Si tel n'est pas le cas, les flux de plus haut niveau hiérarchique (par exemple p) ont leur niveau hiérarchique qui, par troncature, est décrémenté d'une unité (p - 1). La comparaison est de nouveau effectuée jusqu'au moment où aucune troncature n'est nécessaire.

Le sur-débit lié aux en-têtes des paquets des flux envoyés est mutualisé ou non selon le type de pont considéré. Plus précisément, il est mutualisé dans le cas d'un pont à multiplexage et il ne l'est pas dans le cas d'un pont à réplication.

Pour illustrer cette stratégie, on va se placer, comme précédemment, dans le cas d'un point à réplication et dans le cas également où l'on utilise des trames audio de 40 ms pour lesquelles le sur-débit d'en-tête Ds est égal à 8 kbit/s. On va prendre D1 = 8 kbit/s, D2 = 6 kbit/s, D3 = 16 kbit/s, et l'on va considérer les bandes passantes disponibles BP1 à BP4 (par exemple la bande passante déclarée) sur les liens LS1 à LS4 comme étant respectivement égales à BP1 = 56 kbit/s, BP2 = 64 kbit/s, BP3 = 96 kbit/s, et BP4 = 28 kbit/s.

Le débit transmis $DE_j^q$ par un terminal j est la somme du débit des charges utiles des paquets qu'il émet dépendant du niveau hiérarchique des informations contenues dans ces charges utiles et du débit De des en-têtes de ces paquets des flux entrants. On peut donc écrire, pour un niveau hiérarchique q :

$$DE_j^q = De + \sum_1^q Dp$$

Dans l'exemple illustratif suivant, on va supposer que le terminal 1 émet en utilisant la hiérarchie 1 (on peut donc écrire : $DE_1^1 = De + D1 = 8 + 8 \text{ kbit/s} = 16 \text{ kbit/s}$), que les terminaux 2 et 4 émettent en utilisant la hiérarchie 3 (on peut donc écrire :

$$DE_2^3 = DE_4^3 = De + D1 + D2 + D3 = 8 + 8 + 6 + 16 = 38 \text{ kbit/s}$$) et que le terminal 3 émet en utilisant la hiérarchie 2 (on peut donc écrire : $DE_3^2 = De + D1 + D2 = 8 + 8 + 6 = 22 \text{ kbit/s}$).

Comme précédemment, on a tracé ci-dessous un tableau pour illustrer tous les cas qui se présentent.

| | Terminal 1 $DE_1^1 = 16$ | Terminal 2 $DE_2^3 = 38$ | Terminal 3 $DE_3^2 = 22$ | Terminal 4 $DE_4^3 = 38$ |
|---|---|---|---|---|
| Terminal 1 | | $DG_2^1 = 16$ | $DG_3^1 = 16$ | $DG_4^1 = 16$ |
| Terminal 2 | $DG_1^1 = 16$ | | $DG_3^2 = 22$ | $DG_4^2 = 22$ |
| Terminal 3 | $DG_1^1 = 16$ | $DG_2^3 = 38$ | | $DG_4^3 = 38$ |
| Terminal 4 | $DG_1^1 = 16$ | $DG_2^3 = 38$ | $DG_3^2 = 22$ | |

Si l'on considère la bande passante disponible BP1 du pont 10 vers le terminal 1 (56 kbits/s), on peut constater qu'elle est inférieure au débit $DU_1$ utile au terminal 1 pour recevoir tous les flux envoyés par les (N-1) autres terminaux (somme égale à 38 + 22 + 3 8 = 98 kbits/s) à leurs niveaux hiérarchiques respectifs. On décrémente alors les hiérarchies de plus forte valeur (en l'occurrence, celle utilisée par les terminaux 2 et 4). Le débit $DU_1$ utile au terminal 1 pour recevoir tous les flux issus des autres terminaux à ces nouveaux niveaux hiérarchiques est donc maintenant de 22 + 22 + 22 = 66 kbits/s. La bande passante disponible BP1 du pont 10 vers le terminal 1 est encore inférieure au débit utile $DU_1$. On décrémente encore les hiérarchies de plus forte valeur, en l'occurrence toutes. Le débit utile $DU_1$ est maintenant égal à 16 + 16 + 16 = 48 kbits/s. La bande passante disponible du terminal 1 est maintenant supérieure à cette somme. Les flux issus des terminaux sont donc tronqués de manière à présenter ce débit.

Si l'on considère la bande passante disponible BP2 du pont 10 vers le terminal 2 (64 kbits/s), on peut constater qu'elle est inférieure au débit $DU_2$ utile au terminal 2 pour recevoir tous les flux envoyés par les (N-1) autres terminaux (16 + 22 + 38 = 76). On décrémente alors les hiérarchies de plus forte valeur (en l'occurrence, celle utilisée par le terminal 4). Le débit $DU_2$ utile au terminal 2 pour recevoir tous les flux issus des autres terminaux à ces nouveaux niveaux hiérarchiques est donc maintenant de 16 + 22 + 22 = 60 kbits/s. La bande passante BP2 disponible du pont 10 vers le terminal 2 est maintenant supérieure à ce débit utile $DU_2$. Le flux issu du terminal 4 est donc tronqué de manière à présenter ce débit.

On présente maintenant une variante de réalisation de l'invention dans laquelle on affecte à chacun des flux émis par les terminaux un indice de priorité et l'on décrémente le niveau de hiérarchie de codage dans l'ordre inverse des indices de priorité. On notera que cet indice de priorité peut être simplement binaire (prioritaire/non-prioritaire) ou plus complexe, par exemple définissant des classes de priorité.

| | Terminal 1 $DE_1^1 = 16$ | Terminal 2 $DE_2^3 = 38$ | Terminal 3 $DE_3^2 = 22$ | Terminal 4 $DE_4^3 = 38$ |
|---|---|---|---|---|
| Terminal 1 — 56 | | $DG_2^1 = 16$ | $DG_3^1 = 16$ | $DG_4^1 = 16$ |
| Terminal 2 — 64 | $DG_1^1 = 16$ | | $DG_3^2 = 22$ | $DG_4^2 = 22$ |
| Terminal 3 — 80 | $DG_1^1 = 16$ | $DG_2^3 = 38$ | | $DG_4^2 = 22$ |
| Terminal 4 — 128 | $DG_1^1 = 16$ | $DG_2^3 = 38$ | $DG_3^2 = 22$ | |

Si l'on considère une bande passante disponible BP3 du pont 10 vers le terminal 3 égale maintenant à 80 kbits/s au lieu de 96 kbits comme précédemment, on peut constater qu'elle est inférieure au débit $DU_3$ utile au terminal 3 pour recevoir tous les flux des autres terminaux à leurs niveaux hiérarchiques respectifs (16 + 38 + 38 = 92 kbits/s). Selon la méthode précédente (sans indice de priorité), on décrémente alors les hiérarchies de plus forte valeur (en l'occurrence, celle utilisée par les terminaux 2 et 4). Le débit $DU_3$ utile au terminal 3 est maintenant égal à 16 + 22 + 22 = 60 kbits/s qui est bien inférieure à la bande passante BP3. L'on devrait donc utiliser les niveaux hiérarchiques 1 pour le flux issu du terminal 1 et les niveaux hiérarchiques 2 pour les flux issus des terminaux 2 et 4.

Maintenant, si on considère que le terminal 2 est prioritaire sur les autres terminaux, on ne décrémentera que la hiérarchie du terminal 4. Le débit $DU_3$ utile au terminal 3 est maintenant égal à 16 + 38 + 22 = 76 kbits/s qui est aussi inférieure à la bande passante BP3. Dans ce cas, l'on utilisera les niveaux hiérarchiques 1 pour le flux issu du terminal 1, le niveau hiérarchique 3 pour le flux issu du terminal 2 et le niveau hiérarchique 2 pour le flux issu du terminal 4.

Cette dernière caractéristique d'optimisation peut être mise en oeuvre, notamment dans des cas où l'information de priorité ne demande qu'une augmentation de complexité limitée. L'indice de priorité est par exemple positionné dans la charge utile du paquet ou dans l'en-tête du paquet lui-même ou communiqué par le réseau ou l'administrateur du réseau à l'unité de contrôle 20 (flèche A).

Les méthodes décrites ci-dessus sont mises en oeuvre par l'unité de contrôle 20 à chaque fois que les informations de bandes passantes disponibles sont modifiées, à chaque fois qu'un terminal entre ou sort de la conférence ou/et à chaque fois que les niveaux hiérarchiques des flux émis par les terminaux changent. Elles sont donc mises en oeuvre à chaque fois que de nouvelles informations sont communiquées à l'unité de contrôle 20, par exemple par le réseau ou l'administrateur du réseau (flèche A).

Plus précisément, lorsqu'un nouveau terminal demande à entrer dans la conférence, mais qu'au moins un des terminaux déjà connecté est en limite de capacité, la requête de ce nouveau terminal est rejetée. Il en est de même lorsque ce nouveau terminal va être en sur-débit sur son lien de sortie en cas de connexion. Dans tous les autres cas, le terminal est accepté et les stratégies décrites ci-dessus sont mises en oeuvre.

Dans les exemples donnés ci-dessus, on a vu l'application de ces stratégies pour un codeur hiérarchique audio, mais elle peut être extrapolée facilement à un codeur hiérarchique vidéo, où cette fois l'on considère les débits crêtes des niveaux hiérarchiques. En effet, bien souvent, les débits des codeurs vidéo fluctuent en fonction de la quantité de mouvements dans l'image avec néanmoins un débit maximum, dit débit crête. Dans le cas de codeurs vidéo hiérarchiques, on peut définir des paliers de débit maximum pour chaque niveau hiérarchique.

Dans le cas d'une visioconférence, avec des codeurs audio et vidéo hiérarchiques, pour appliquer les stratégies ci-dessus, on pourra définir des niveaux hiérarchiques en combinant les niveaux hiérarchiques du codeur audio et du codeur vidéo.

De la même manière, cette gestion hiérarchique peut être appliquée à tous flux binaires hiérarchiques transitant par le pont, que ce flux représente de l'audio, de la vidéo ou d'autres types de données.

On a représenté à la Fig. 4 un mode de réalisation d'un système de conférence selon l'invention qui est plus adapté au pont dit à mixage. Sur cette Fig. 4, on peut voir que le pont 10 comporte des unités d'assemblage 11 à 14 dont la fonction est de mixer les flux audio qui sont issus des terminaux et de délivrer au terminal associé un unique flux audio mixé. Généralement, ces unités d'assemblage 11 à 14 sont incluses dans une unique unité fonctionnelle 15. On notera que, dans ce type de pont, chaque terminal i ne reçoit qu'un flux audio (dans le cas d'une audioconférence) et aussi qu'un flux vidéo dans le cas d'une visioconférence.

Préalablement à cette délivrance, le flux audio délivré par chaque unité d'assemblage 11 à 14 est traité par une unité de traitement 21 à 24 correspondante dont la fonction essentielle est de tronquer ou de ne pas tronquer les flux assemblés issus des unités d'assemblage 11 à 14 et de délivrer des flux possédant un niveau hiérarchique de codage déterminé par l'unité de contrôle 20. Comme dans l'exemple de réalisation précédent, l'unité de contrôle 20 agit en fonction de critères décisionnels déterminés eux-mêmes en fonction d'informations issues du réseau (flèche A), d'informations relatives à la bande passante disponible BP1 à BP4 sur les liens de sortie LS1 à LS4 délivrées par des unités 41 à 44 d'évaluation.

Un tel mode de réalisation est plus particulièrement adapté à la mise en oeuvre de la première méthode décrite ci-dessus. En effet, la décision du niveau de hiérarchie à appliquer à un flux sur un lien de sortie LSi ne se fait qu'en fonction des capacités statiques et/ou dynamiques du terminal i vers lequel est transmis ce flux. Suivant la capacité du lien LSi vers le terminal i à un moment donné, le pont 10 décidera du niveau hiérarchique à transmettre vers ce terminal i.

On notera encore que les unités d'assemblage 11 à 14 peuvent, préalablement à la sommation des flux audio sur leurs entrées, sélectionner les flux les plus actifs, ce, de manière à permettre de gérer des conférences avec beaucoup de participants et donc de terminaux. Ainsi, les participants dont les signaux sont les plus actifs, reçoivent cette sommation moins leur signal. Pour la vidéo, ils choisissent la vidéo de la voie la plus active (vidéo commutée) ou composent une vidéo à partir des voies les plus actives.

En utilisant des codeurs hiérarchiques à la manière de l'invention, on n'effectue qu'un seul codage, mais, comme dans le cas des ponts à multiplexage ou répliquants, à l'envoi vers chaque participant, une décision sur le niveau hiérarchique à envoyer est prise par participant en fonction de la bande passante disponible entre le pont et ce participant.

On notera que, de manière générale, l'invention permet aussi ici de gérer au niveau du pont des disparités dans les capacités des participants et ainsi d'offrir une qualité de service (c'est-à-dire la qualité des signaux audio et vidéo) au mieux des capacités de chaque participant vu indépendamment et au mieux des capacités du système.

La présente invention permet de pallier l'inconvénient des systèmes de conférence de l'art antérieur où, dans le cas de problème de capacité vers au moins un participant, on fait soit un repli dans un mode demandant moins de capacité et donc dans un mode de moindre qualité qui sera imposé à tous les participants, soit un sacrifice du lien à plus faible capacité. Dans ce dernier cas, par exemple, on continue à envoyer des données sur le lien correspondant sans tenir compte du problème, ce qui a pour effet d'engorger ce lien, entraînant des pertes de paquets. Le client en question ne reçoit alors le ou les flux qu'avec des erreurs. Il est donc fortement pénalisé en terme de qualité, voire incapable de participer à la conférence. L'invention remédie à cette situation.

On notera que le principe de l'invention peut être adapté au cas d'un terminal qui, recevant un ou plusieurs flux hiérarchiques, pourra, en fonction des critères décisionnels (capacité de calcul, priorité des flux, etc.) décider des niveaux hiérarchiques à décoder pour assurer un rendu sonore optimale.

**Revendications**

1. Système de conférence du type qui comprend un pont (10) auquel une pluralité de terminaux ( 1 à 4) peuvent se connecter pour participer à une conférence, ledit pont (10) étant prévu pour recevoir les flux audio et/ou vidéo et/ou de données de chaque terminal (1 à 4) et les retransmettre aux autres terminaux,

   les flux émis par lesdits terminaux (1 à 4) étant codés au moyen de codeurs hiérarchiques,

   **caractérisé en ce que** ledit pont (10) est pourvu :

   - de moyens (21 à 24, 212 à 243) pour traiter les flux audio/vidéo/de données issus des terminaux (j) de manière à ce qu'ils présentent un niveau hiérarchique (q) dans le flux à destination d'un terminal (i) et
   - de moyens (20) pour déterminer ledit niveau hiérarchique (q) en fonction :

      - d'une information dynamique concernant la bande passante disponible (BPi) sur le lien de sortie (LSi) entre ledit pont (10) et ledit terminal (i) et
      - du nombre (N) de terminaux participant à la conférence.

2. Système de conférence selon la revendication 1, **caractérisé en ce que** lesdits moyens pour traiter les flux audio/vidéo/de données sont constitués d'unités de traitement (21 à 24, 212 à 243) prévues pour tronquer les charges utiles des paquets utilisés pour la transmission de manière à ce que lesdits flux présentent le niveau hiérarchique requis.

3. Système de conférence selon la revendication 2, **caractérisé en ce que** lesdits moyens (20) pour déterminer ledit niveau hiérarchique déterminent le niveau hiérarchique q requis pour un terminal (i) lorsque la bande passante disponible (BPi) sur le lien (LSi) entre le pont (10) et le terminal (i) est inférieure au débit $(DU_i^{q+1})$ utilisé par le terminal (i) pour recevoir le niveau hiérarchique (q + 1) mais est supérieure au débit $(DU_i^q)$ utilisé par le terminal (i) pour recevoir le niveau hiérarchique q.

4. Système de conférence selon la revendication 1 ou 2, **caractérisé en ce que** lesdits moyens (20) pour déterminer ledit niveau hiérarchique déterminent le niveau hiérarchique q requis pour un terminal (i) sur la base d'informations concernant sa bande passante utile (BPi) sur le lien de sortie (LSi) entre ledit pont (10) et ledit terminal (i), le nombre (N) de terminaux participant à la conférence et sur la base des informations des débits $\left( DE_j^q \right)$ transmis par chaque terminal (j) vers le pont (10) pour des niveaux hiérarchiques (q).

5. Système de conférence selon la revendication 4, **caractérisé en ce que** lesdits moyens (20) pour déterminer ledit niveau hiérarchique déterminent le niveau hiérarchique (q) du flux issu d'un terminal (j) pour un terminal (i) à l'aide de :

    a) moyens de détermination de la bande passante disponible (BPi) du lien (LSi) entre le pont (10) et le terminal (i) et de comparaison de celle-ci à la somme des débits $\left( DE_j^q \right)$ des flux envoyés par les autres terminaux (j), en tenant compte des sur-débits des en-têtes des paquets des flux reçus desdits autres terminaux (j), lesdits sur-débits liés aux en-têtes des paquets des flux issus des terminaux étant mutualisés ou non selon le type de pont considéré, de façon que, si ladite bande passante disponible (BPi) n'est pas inférieure à la somme des débits $\left( DE_j^q \right),$ alors les niveaux hiérarchiques (q) des flux desdits autres terminaux (j) vers le terminal (i) ne sont pas modifiés,

    b) moyens de décrémentation qui, si tel n'est pas le cas, décrémente d'une unité (q = q-1) le niveau hiérarchique des flux émis par les autres terminaux (j) qui présentent le plus haut niveau hiérarchique,

    c) moyens de contrôle agissant sur lesdits moyens de comparaison et de décrémentation, pour modifier lesdits niveaux hiérarchiques jusqu'à ce que la bande passante disponible (BPi) du lien (LSi) vers le terminal (i) soit supérieure à la somme des débits $\left( DE_j^q \right)$ des flux envoyés par les autres terminaux (j) avec les niveaux hiérarchiques précédemment déterminés.

6. Système de conférence selon la revendication 5, **caractérisé en ce que** les flux émis par les terminaux (j) comportent un indice de priorité, et **en ce que** l'étape b) de décrémentation des niveaux hiérarchiques de plus haut niveau est effectuée sur les flux issus des terminaux dans l'ordre des indices de priorité affectés auxdits flux.

7. Système de conférence selon la revendication 6, **caractérisé en ce que** ledit indice de priorité est binaire, ou plus complexe, définissant par exemple des classes de priorité.

8. Système de conférence selon une des revendications 1 à 7, **caractérisé en ce que** lesdites informations concernant la bande passante utile (BPi) d'un terminal (i) comprennent également des informations statiques théoriques disponibles pour ledit terminal (i).

9. Système de conférence selon la revendication 8, **caractérisé en ce que** lesdites informations statiques théoriques dépendant d'une bande passante théorique disponible, des capacités de calcul dudit terminal (i) considéré et des droits d'accès pour ledit terminal (i).

10. Système de conférence selon la revendication 9, **caractérisé en ce que** lesdites informations dynamiques concernant la bande passante utile (BPi) du lien (LSi) vers le terminal (i) sont des informations dynamiques délivrées par des unités d'évaluation (31 à 34) de la bande passante physique disponible.

11. Procédé de détermination de niveaux hiérarchiques de flux audio et/ou vidéo et/ou de données, dans un système de conférence du type qui comprend un pont (10) auquel une pluralité de terminaux (1 à 4) peuvent se connecter pour participer à une conférence, ledit pont (10) étant prévu pour recevoir les flux audio et/ou vidéo et/ou de données de chaque terminal (1 à 4) et les retransmettre aux autres terminaux,
les flux émis par lesdits terminaux (1 à 4) étant codés au moyen de codeurs hiérarchiques,
**caractérisé en ce qu'**il comprend les étapes suivantes :

- détermination d'un niveau hiérarchique (q) requis pour un flux émis par un terminal (j) et destiné un terminal (i), en fonction :

  - d'une information dynamique concernant la bande passante disponible (BPi) sur le lien de sortie (LSi) entre ledit pont (10) et ledit terminal (i) et
  - du nombre (N) de terminaux participant à la conférence et

- traitement desdits flux audio/vidéo/de données issus des terminaux (j) de manière à ce qu'ils présentent un niveau hiérarchique (q) dans le flux à destination d'un terminal (i).

12. Procédé selon la revendication 11, **caractérisé en ce que** ladite étape de détermination déterminent le niveau hiérarchique (q) du flux issu d'un terminal (j) pour un terminal (i) à l'aide de :

a) si la bande passante disponible (BPi) du lien (LSi) entre le pont (10) et le terminal (i) n'est pas inférieure à la somme des débits $\left(DE_j^q\right)$ des flux envoyés par les autres terminaux (j), en tenant compte des sur-débits des en-têtes des paquets des flux reçus desdits autres terminaux (j), lesdits sur-débits liés aux en-têtes des paquets des flux issus des terminaux étant mutualisés ou non selon le type de pont considéré, alors les niveaux hiérarchiques (q) des flux desdits autres terminaux (j) vers le terminal (i) ne sont pas modifiés,
b) si tel n'est pas le cas, les flux émis par les autres terminaux(j) qui présentent le plus haut niveau hiérarchique ont leur niveau hiérarchique qui est décrémenté d'une unité (q = q-1),

c) la bande passante disponible (BPi) du lien (LSi) vers le terminal (i) est de nouveau comparée à la somme des débits $\left(DE_j^q\right)$ des flux envoyés par les autres terminaux (j) avec les niveaux hiérarchiques précédemment déterminés à l'étape b), les sur-débits liés aux en-têtes des paquets des flux issus des terminaux étant mutualisés ou non selon le type de pont considéré,
d) si la bande passante disponible (BPi) n'est pas inférieure, les niveaux hiérarchiques ne sont plus modifiés,
e) sinon les étapes b) et c) sont de nouveau mises en oeuvre jusqu'à ce que la bande passante disponible (BPi) du lien (LSi) vers le terminal (i) soit supérieure à la somme des débits $\left(DE_j^q\right)$ des flux envoyés par les autres terminaux (j) avec les niveaux hiérarchiques précédemment déterminés.

**Claims**

1. Conference system of the type which comprises a bridge (10) to which a plurality of terminals (1 to 4) can connect so as to participate in a conference, said bridge (10) being designed to receive the audio and/or video and/or data flows of each terminal (1 to 4) and retransmit them to the other terminals,
the flows sent by said terminals (1 to 4) being coded by means of hierarchical coders,
**characterized in that** said bridge (10) is provided:

- with means (21 to 24, 212 to 243) for processing the audio/video/data flows arising from the terminals (j) in such a way that they exhibit a hierarchical level (q) in the flow destined for a terminal (i) and
- with means (20) for determining said hierarchical level (q) as a function:

  - of a piece of dynamic information relating to the available bandwidth (BPi) on the output link (LSi) between said bridge (10) and said terminal (i) and
  - of the number (N) of terminals participating in the conference.

2. Conference system according to Claim 1, **characterized in that** said means for processing the audio/video/data flows consist of processing units (21 to 24, 212 to 243) designed to truncate the payloads of the packets used for the transmission in such a way that said flows exhibit the hierarchical level required.

3. Conference system according to Claim 2, **characterized in that** said means (20) for determining said hierarchical level determine the hierarchical level q required for a terminal (i) when the available bandwidth (BPi) on the link (LSi) between the bridge (10) and the terminal (i) is less than the rate ($DU_i^{\,q+1}$) used by the terminal (i) to receive the hierarchical level (q + 1) but is greater than the rate ($DU_i^q$) used by the terminal (i) to receive the hierarchical level q.

4. Conference system according to Claim 1 or 2, **characterized in that** said means (20) for determining said hierarchical level determine the hierarchical level q required for a terminal (i) on the basis of information relating to its useful bandwidth (BPi) on the output link (LSi) between said bridge (10) and said terminal (i), the number (N) of terminals participating in the conference and on the basis of the information about the rates ($DE_j^q$) transmitted by each terminal (j) to the bridge (10) for hierarchical levels (q).

5. Conference system according to Claim 4, **characterized in that** said means (20) for determining said hierarchical level determine the hierarchical level (q) of the flow arising from a terminal (j) for a terminal (i) with the aid of:

   a) means for determining the available bandwidth (BPi) of the link (LSi) between the bridge (10) and the terminal (i) and for comparing said bandwidth with the sum of the rates ($DE_j^q$) of the flows dispatched by the other terminals (j), taking account of the overheads of the headers of the packets of the flows received from said other terminals (j), said overheads related to the headers of the packets of the flows arising from the terminals being mutualized or not, depending on the type of bridge considered, so that, if said available bandwidth (BPi) is not less than the sum of the rates ($DE_j^q$), then the hierarchical levels (q) of the flows from said other terminals (j) to the terminal (i) are not modified,
   b) decrementing means which, if such is not the case, decrement by one unit (q = q-1) the hierarchical level of the flows sent by the other terminals (j) which exhibit the highest hierarchical level,
   c) control means acting on said comparing and decrementing means, so as to modify said hierarchical levels until the available bandwidth (BPi) of the link (LSi) to the terminal (i) is greater than the sum of the rates ($DE_j^q$) of the flows dispatched by the other terminals (j) with the previously determined hierarchical levels.

6. Conference system according to Claim 5, **characterized in that** the flows sent by the terminals (j) comprise a priority index, and **in that** step b) of decrementing the hierarchical levels of higher level is performed on the flows arising from the terminals in the order of the priority indices assigned to said flows.

7. Conference system according to Claim 6, **characterized in that** said priority index is binary, or more complex, defining priority classes for example.

8. Conference system according to one of Claims 1 to 7, **characterized in that** said information relating to the useful bandwidth (BPi) of a terminal (i) also comprises theoretical static information available for said terminal (i).

9. Conference system according to Claim 8, **characterized in that** said theoretical static information depends on an available theoretical bandwidth, the calculational capabilities of said terminal (i) considered and the access rights for said terminal (i).

10. Conference system according to Claim 9, **characterized in that** said dynamic information relating to the useful bandwidth (BPi) of the link (LSi) to the terminal (i) is dynamic information delivered by evaluation units (31 to 34) for evaluating the available physical bandwidth.

11. Method for determining hierarchical levels of audio and/or video and/or data flows in a conference system of the type which comprises a bridge (10) to which a plurality of terminals (1 to 4) can connect so as to participate in a conference, said bridge (10) being designed to receive the audio and/or video and/or data flows of each terminal ( 1 to 4) and retransmit them to the other terminals,
the flows sent by said terminals (1 to 4) being coded by means of hierarchical coders,
**characterized in that** it comprises the following steps:

   - determining a hierarchical level (q) required for a flow sent by a terminal (j) and intended for a terminal (i), as a function:

      - of a piece of dynamic information relating to the available bandwidth (BPi) on the output link (LSi) between said bridge (10) and said terminal (i) and
- of the number (N) of terminals participating in the conference and

- processing said audio/video/data flows arising from the terminals (j) in such a way that they exhibit a hierarchical level (q) in the flow destined for the terminal (i).

12. Method according to Claim 11, **characterized in that** said determining step determines the hierarchical level (q) of the flow arising from a terminal (j) for a terminal (i) with the aid of:

a) if the available bandwidth (BPi) of the link (LSi) between the bridge (10) and the terminal (i) is not less than the sum of the rates ($DE_j^q$) of the flows dispatched by the other terminals (j), taking account of the overheads of the headers of the packets of the flows received from said other terminals (j), said overheads related to the headers of the packets of the flows arising from the terminals being mutualized or not, depending on the type of bridge considered, then the hierarchical levels (q) of the flows from said other terminals (j) to the terminal (i) are not modified,
b) if such is not the case, the flows sent by the other terminals (j) which exhibit the highest hierarchical level have their hierarchical level which is decremented by one unit (q = q-1),
c) the available bandwidth (BPi) of the link (LSi) to the terminal (i) is again compared with the sum of the rates ($DE_j^q$) of the flows dispatched by the other terminals (j) with the hierarchical levels previously determined in step b), the overheads related to the headers of the packets of the flows arising from the terminals being mutualized or not, depending on the type of bridge considered,
d) if the available bandwidth (BPi) is not lower, the hierarchical levels are no longer modified,
e) otherwise steps b) and c) are implemented again until the available bandwidth (BPi) of the link (LSi) to the terminal (i) is greater than the sum of the rates ($DE_j^q$) of the flows dispatched by the other terminals (j) with the previously determined hierarchical levels.

### Patentansprüche

1. Konferenzsystem von dem Typ, der eine Brücke (10) aufweist, mit der sich mehrere Endgeräte (1 bis 4) verbinden können, um an einer Konferenz teilzunehmen, wobei die Brücke (10) vorgesehen ist, um die Audio- und/oder Video- und/oder Datenflüsse von jedem Endgerät (1 bis 4) zu empfangen und sie an die anderen Endgeräte weiterzuleiten, wobei die von den Endgeräten (1 bis 4) gesendeten Flüsse mittels hierarchischer Codierer codiert werden, **dadurch gekennzeichnet, dass** die Brücke (10) versehen ist mit:

- Mitteln (21 bis 24, 212 bis 243), um die von den Endgeräten (j) stammenden Audio/Video/Datenflüsse zu verarbeiten, damit sie eine Hierarchieebene (q) in dem für ein Endgerät (i) bestimmten Fluss aufweisen, und
- Mitteln (20), um die Hierarchieebene (q) zu bestimmen in Abhängigkeit von:

- einer dynamischen Information, die die verfügbare Bandbreite (BPi) im Ausgangslink (LSi) zwischen der Brücke (10) und dem Endgerät (i) betrifft, und
- der Anzahl (N) von an der Konferenz teilnehmenden Endgeräten.

2. Konferenzsystem nach Anspruch 1, **dadurch gekennzeichnet, dass** die Mittel zur Verarbeitung der Audio/Video/ Datenflüsse aus Verarbeitungseinheiten (21 bis 24, 212 bis 243) bestehen, die vorgesehen sind, um die Nutzlasten der für die Übertragung verwendeten Pakete so zu kürzen, dass die Flüsse die erforderliche Hierarchieebene aufweisen.

3. Konferenzsystem nach Anspruch 2, **dadurch gekennzeichnet, dass** die Mittel (20) zur Bestimmung der Hierarchieebene die für ein Endgerät (i) erforderliche Hierarchieebene q bestimmen, wenn die verfügbare Bandbreite (BPi) auf dem Link (LSi) zwischen der Brücke (10) und dem Endgerät (i) geringer als der vom Endgerät (i) genutzte Durchsatz ($DU_i^{q+1}$), um die Hierarchieebene (q+1) zu empfangen, aber größer als der vom Endgerät (i) genutzte Durchsatz ($DU_i^q$) um die Hierarchieebene q zu empfangen, ist.

4. Konferenzsystem nach Anspruch 1 oder 2, **dadurch gekennzeichnet, dass** die Mittel (20) zur Bestimmung der Hierarchieebene die für ein Endgerät (i) erforderliche Hierarchieebene q auf der Basis von Informationen betreffend seine Nutzbandbreite (BPi) auf dem Ausgangslink (LSi) zwischen der Brücke (10) und dem Endgerät (i), der Anzahl (N) von an der Konferenz teilnehmenden Endgeräten und auf der Basis der Informationen der Durchsätze ($DE_j^q$)

bestimmen, die von jedem Endgerät (j) zur Brücke (10) für Hierarchieebenen (q) übertragen werden.

5. Konferenzsystem nach Anspruch 4, **dadurch gekennzeichnet, dass** die Mittel (20) zur Bestimmung der Hierarchieebene die Hierarchieebene (q) des von einem Endgerät (j) stammenden Flusses für ein Endgerät (i) bestimmen mit Hilfe von:

a) Mitteln zur Bestimmung der verfügbaren Bandbreite (BPi) des Links (LSi) zwischen der Brücke (10) und dem Endgerät (i) und zu deren Vergleich mit der Summe der Durchsätze ($DE_j^q$) der von den anderen Endgeräten (j) gesendeten Flüsse unter Berücksichtigung der Overheads der Kopfzeilen der Pakete der von den anderen Endgeräten (j) empfangenen Flüsse, wobei die mit den Kopfzeilen der Pakete der von den Endgeräten stammenden Flüsse verbundenen Overheads je nach dem betreffenden Brückentyp gebündelt sind oder nicht, so dass, wenn die verfügbare Bandbreite (BPi) nicht geringer ist als die Summe der Durchsätze ($DE_j^q$), die Hierarchieebenen (q) der Flüsse der anderen Endgeräte (j) zum Endgerät (i) nicht verändert werden,
b) Dekrementierungsmitteln, die, wenn dies nicht der Fall ist, die Hierarchieebene der von den anderen Endgeräte (j) ausgegebenen Flüsse, die die höchste Hierarchieebene haben, um eine Einheit (q=q-1) dekrementieren,
c) Kontrollmitteln, die auf die Vergleichs- und Dekrementierungsmittel einwirken, um die Hierarchieebenen zu verändern, bis die verfügbare Bandbreite (BPi) des Links (LSi) zum Endgerät (i) größer ist als die Summe der Durchsätze ($DE_j^q$) der von den anderen Endgeräten (j) mit den vorher bestimmten Hierarchieebenen gesendeten Flüsse.

6. Konferenzsystem nach Anspruch 5, **dadurch gekennzeichnet, dass** die von den Endgeräten (j) gesendeten Flüsse einen Prioritätsindex aufweisen, und dass der Schritt b) der Dekrementierung der Hierarchieebenen höchster Ebene an den von den Endgeräten stammenden Flüssen in der Reihenfolge der den Flüssen zugewiesenen Prioritätsindices durchgeführt wird.

7. Konferenzsystem nach Anspruch 6, **dadurch gekennzeichnet, dass** der Prioritätsindex binär oder komplexer ist, zum Beispiel Prioritätsklassen definiert.

8. Konferenzsystem nach einem der Ansprüche 1 bis 7, **dadurch gekennzeichnet, dass** die Informationen betreffend die Nutzbandbreite (BPi) eines Endgeräts (i) ebenfalls für das Endgerät (i) verfügbare theoretische statische Informationen enthalten.

9. Konferenzsystem nach Anspruch 8, **dadurch gekennzeichnet, dass** die theoretischen statischen Informationen von einer theoretischen verfügbaren Bandbreite, von den Rechenkapazitäten des betrachteten Endgeräts (i) und von den Zugangsrechten für das Endgerät (i) abhängen.

10. Konferenzsystem nach Anspruch 9, **dadurch gekennzeichnet, dass** die dynamischen Informationen betreffend die Nutzbandbreite (BPi) des Links (LSi) zum Endgerät (i) dynamische Informationen sind, die von Auswertungseinheiten (31 bis 34) der physikalischen verfügbaren Bandbreite abhängen.

11. Verfahren zur Bestimmung von Hierarchieebenen eines Audio- und/oder Video- und/oder Datenflusses in einem Konferenzsystem des Typs, der eine Brücke (10) aufweist, mit der mehrere Endgeräte (1 bis 4) sich verbinden können, um an einer Konferenz teilzunehmen, wobei die Brücke (10) vorgesehen ist, um die Audio- und/oder Video- und/oder Datenflüsse von jedem Endgerät (1 bis 4) zu empfangen und an die anderen Endgeräte weiterzuleiten, wobei die von den Endgeräten (1 bis 4) gesendeten Flüsse mittels hierarchischer Codierer codiert werden, **dadurch gekennzeichnet, dass** es die folgenden Schritte aufweist:

- Bestimmung einer Hierarchieebene (q), die für einen Fluss erforderlich ist, der von einem Endgerät (j) gesendet wird und für ein Endgerät (i) bestimmt ist, in Abhängigkeit von:

- einer dynamischen Information betreffend die verfügbare Bandbreite (BPi) auf dem Ausgangslink (LSi) zwischen der Brücke (10) und dem Endgerät (i), und
- der Anzahl (N) von Endgeräten, die an der Konferenz teilnehmen, und

- Verarbeitung der von den Endgeräten (j) stammenden Audio/Video/Datenflüsse, damit sie eine Hierarchieebene (q) in dem für ein Endgerät (i) bestimmten Fluss aufweisen.

**12.** Verfahren nach Anspruch 11, **dadurch gekennzeichnet, dass** der Bestimmungsschritt die Hierarchieebene (q) des von einem Endgerät (j) stammenden Flusses für ein Endgerät (i) bestimmt mit Hilfe von:

a) wenn die verfügbare Bandbreite (BPi) des Links (LSi) zwischen der Brücke (10) und dem Endgerät (i) nicht geringer ist als die Summe der Durchsätze ($DE_j^q$) der von den anderen Endgeräten (j) gesendeten Flüsse, unter Berücksichtigung der Overheads der Kopfzeilen der Pakete der von den anderen Endgeräten (j) empfangenen Flüsse, wobei die mit den Kopfzeilen der Pakete der von den Endgeräten stammenden Flüsse verbundenen Overheads je nach dem betrachteten Brückentyp gebündelt werden oder nicht, werden die Hierarchieebenen (q) der Flüsse der anderen Endgeräte (j) zum Endgerät (i) dann nicht verändert,

b) wenn dies nicht der Fall ist, wird die Hierarchieebene der von den anderen Endgeräten (j) gesendeten Flüsse, die die höchste Hierarchieebene haben, um eine Einheit (q=q-1) dekrementiert,

c) die verfügbare Bandbreite (BPi) des Links (LSi) zum Endgerät (i) wird erneut mit der Summe der Durchsätze ($DE_j^q$) der von den anderen Endgeräten (j) gesendeten Flüsse mit den vorher im Schritt b) bestimmten Hierarchieebenen verglichen, wobei die mit den Kopfzeilen der Pakete der von den von den Endgeräten stammenden Flüsse verbundenen Overheads je nach dem betrachteten Brückentyp gebündelt werden oder nicht,

d) wenn die verfügbare Bandbreite (BPi) nicht geringer ist, werden die Hierarchieebenen nicht verändert,

e) sonst werden die Schritte b) und c) erneut angewendet, bis die verfügbare Bandbreite (BPi) des Links (LSi) zum Endgerät (i) größer ist als die Summe der Durchsätze ($DE_j^q$) der von den anderen Endgeräten (j) gesendeten Flüsse mit den vorher bestimmten Hierarchieebenen.

Fig. 1

Fig. 2

Fig. 3

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5758194 A